(19) Europäisches Patentamt
European Patent Office
Office européen des brevets

(11) **EP 4 220 217 B1**

(12) **EUROPEAN PATENT SPECIFICATION**

(45) Date of publication and mention
of the grant of the patent:
**08.04.2026 Bulletin 2026/15**

(21) Application number: **22153363.1**

(22) Date of filing: **26.01.2022**

(51) International Patent Classification (IPC):
*G01S 7/41* (2006.01)          *G01S 13/42* (2006.01)
*G01S 13/52* (2006.01)         *G01S 13/931* (2020.01)

(52) Cooperative Patent Classification (CPC):
**G01S 7/415; G01S 7/417; G01S 13/42;
G01S 13/52; G01S 13/931**

(54) **METHOD AND DEVICE FOR SEGMENTING RADAR DATA, AND DRIVER ASSISTANCE SYSTEM**

VERFAHREN UND VORRICHTUNG ZUR SEGMENTIERUNG VON RADARDATEN UND
FAHRERASSISTENZSYSTEM

PROCÉDÉ ET DISPOSITIF DE SEGMENTATION DE DONNÉES RADAR, ET SYSTÈME D'AIDE AU
CONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.08.2023 Bulletin 2023/31**

(73) Proprietor: **Robert Bosch GmbH
70442 Stuttgart (DE)**

(72) Inventors:
• **Remenyi, Istvan
2890 Tata (HU)**

• **Karasz, Zoltan
1141 Budapest (HU)**

(56) References cited:
**DE-A1- 102018 002 521      DE-A1- 102019 220 615**

• **SCHUMANN OLE ET AL: "Scene Understanding
With Automotive Radar", IEEE TRANSACTIONS
ON INTELLIGENT VEHICLES, IEEE, vol. 5, no. 2,
25 November 2019 (2019-11-25), pages 188 - 203,
XP011790609, ISSN: 2379-8858, [retrieved on
20200522], DOI: 10.1109/TIV.2019.2955853**

## Description

The present invention relates to a method and a device for segmenting radar data and to a driver assistance system.

Prior Art

Driver assistance systems rely on the detection of objects in a surrounding of the vehicle. Modem vehicles can comprise multiple sensors of different types, such as radar sensors, cameras, infrared sensors, lidar sensors and the like. From DE 10 2018 002 521 A1, a method for recognizing persons on the basis of sensor data acquired by means of at least one radar sensor is known. Schumann et al., "Scene Understanding with Automotive Radar", IEEE Transactions on intelligent Vehicles, vol. 5, no. 2, 2019, pages 188-203, relates to extracting semantic data from automotive radar data. DE 10 2019 220615 A1 relates to a device for the recognition and classification of objects.

Based on the sensor data, objects can be identified. For example, a radar sensor can emit radar signals which are reflected by objects in a surrounding of the vehicle. The coordinates of the reflecting objects can be determined by analyzing the received radar signals. Each of the recognized objects can be tracked over time. For example, the moving directions or velocities of the tracked candidate objects can be determined. Such information is important to estimate the likelihoods of possible events, such as a possible collision with another vehicle. Based on this information, the driver assistance systems can inform the driver of possibly dangerous situations or can control functions of the vehicle, such as an adjustment of the speed or the steering angle of the vehicle.

The driver assistance system needs information about the interpretation of radar reflection points determined based on radar data. That is, the radar reflection points must be segmented into different classes, e.g., non-stationary objects, stationary objects and noise.

For point cloud processing, grid based convolution architectures are disclosed in Giese et al., "Road course estimation using deep learning on radar data," 2017 18th International Radar Symposium (IRS), 2017, pp. 1-7. Further, point-wise feature transformations are disclosed in Qi et al., "PointNet: Deep Learning on Point Sets for 3D Classification and Segmentation", https://arxiv.org/abs/1612.00593. Point-wise feature transformations are computationally fast and can capture the local neighborhood information precisely for every point.

Due to radar reflection sparsity, it is however difficult to apply the usual point cloud processing deep learning techniques directly.

Disclosure of the Invention

The invention provides a method and a device for segmenting radar data, and a driver assistance system as recited in the independent claims.

Preferred embodiments are set out in the dependent claims.

According to a first aspect, the invention provides a device for segmenting radar data of a vehicle, according to claim 1.

According to a second aspect, the invention provides a driver assistance system for a vehicle, according to claim 7.

According to a third aspect, the invention provides a method for segmenting radar data of a vehicle, according to claim 8.

Advantages of the invention

The invention makes use of a space-time representation, i.e. uses both spatial and time-based coordinates. When handling sparse data such as radar reflections, information extracted from subsequent frames, i.e. subsequent measurement cycles, helps to make the algorithms more reliable. By extending the spatial coordinates of each radar reflection with a time-dependent coordinate, movement-dependent linear patterns are formed per object. The orientation of these patterns represent the dynamics of the objects associated with subsequent radar reflections. In other words, the local neighborhood of each radar object will hold the dynamic information.

The time-based coordinate of each radar reflection has a unit of distance. To obtain a unit of distance, a measurement time may be transformed by multiplication with a predetermined velocity. The velocity may be fixed but may also depend on time.

For each radar reflection associated with a certain measurement cycle, the time-based coordinate of the radar reflection is obtained by multiplying a measurement time of the associated measurement cycle with a current velocity of the vehicle.

According to a further embodiment of the device for segmenting radar data of the vehicle, the computing device is configured to perform after each new measurement cycle the steps of providing the coordinates of the radar reflections of at least some of the measurement cycles as input to a trained artificial neural network, and of receiving a segmentation of the radar reflections as output of the trained artificial neural network.

According to a further embodiment, the device for segmenting radar data of the vehicle further comprises a first-in first-out, FIFO, memory for storing the coordinates of the radar reflections. For an efficient space-time representation, multiple past frames (i.e., time-based coordinates and spatial coordinates) can be kept.

According to a further embodiment of the device for segmenting radar data of the vehicle, the segmentation comprises a class of non-stationary objects and a class of stationary objects. In the space-time representation, stationary objects move along an essentially linear line parallel to a time axis. Non-stationary objects move along an essentially linear line which deviates from the time axis. Artificial neural networks are well-suited to identify such features and can therefore perform segmentation of the radar data with high accuracy.

According to a further embodiment of the device for segmenting radar data of the vehicle, the segmentation comprises a class corresponding to noise. This allows to differentiate between actual objects and radar reflections which are caused by noise.

According to a further embodiment of the device for segmenting radar data of the vehicle, the computing device is configured to determine the global coordinate system as a current pose of the vehicle, based on a current velocity of the vehicle. By tracking the vehicle's movement, consecutive radar recordings can reliably be transformed into the common coordinate system. After each measurement cycle, the global coordinate system can be recomputed.

Short description of the drawings

Figure 1    shows a block diagram of a driver assistance system comprising a device for segmenting radar data according to an embodiment of the invention;

Figure 2    shows a schematic illustration of radar reflections; and

Figure 3    shows a flow chart of a method for segmenting radar data of a vehicle according to an embodiment of the invention.

The numbering of process steps is for clarity and is generally not intended to imply any particular chronological order. In particular, several process steps can also be carried out simultaneously.

Description of the embodiments

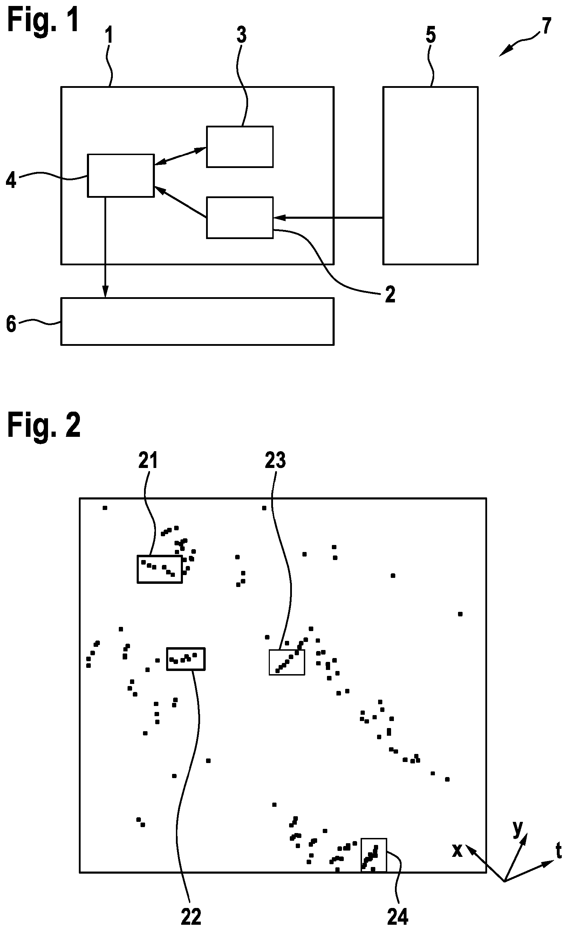

Figure 1 shows a block diagram of a driver assistance system 7 comprising a device 1 for segmenting radar data of a vehicle. The device 1 comprises an interface 2 which communicates with one or more radar sensors 5 of the vehicle.

The interface 2 may communicate with the radar sensors 5 via a CAN bus or the like. The device 1 receives via the interface 2 new radar data from the at least one radar sensor 5. That is, after each measurement cycle (time stamp), new radar data is provided to the device 1. The device 1 may receive raw data from the radar sensor 5. According to other embodiments, the data may already be preprocessed.

The device 1 comprises a computing device 4, such as a microprocessor, microcontroller, a field-programmable gate array, or the like. The computing device 4 identifies after each measurement cycle new radar reflections based on the radar data acquired at the latest measurement cycle. The computing device 4 computes spatial coordinates of radar reflections, which can be two- or three-dimensional coordinates. The spatial coordinates of the radar reflections are defined relative to a global coordinate system, which may be given as a current pose of the vehicle, e.g., based on a current velocity of the vehicle.

Further, the computing device 4 associates a time-based coordinate with each radar reflection. The time-based coordinate can also have a unit of distance like the spatial coordinates. The time-based coordinate of the radar reflection may be obtained by multiplying a measurement time of the associated measurement cycle with a current velocity of the vehicle. The measurement time may indicate the specific time point of the measurement.

The device 1 further comprises a first-in first-out, FIFO, memory device 3 which stores the coordinates of the radar reflections. For the space-time representation, multiple past frames can be kept.

The computing device 4 provides the coordinates of the radar reflections of at least some of the measurement cycles as input to a trained artificial neural network.

The artificial neural network may have been trained by supervised learning, i.e. by providing labeled data and training the weights of the artificial neural network. The architecture of the artificial neural network can be given by the PointNet architecture disclosed in Qi et al., "PointNet: Deep Learning on Point Sets for 3D Classification and Segmentation", https://arxiv.org/abs/1612.00593. The input and output features are modified accordingly.

The artificial neural network can have an input layer with n x m nodes where n corresponds to the number of radar reflections and the parameter m corresponds to the number of coordinates. According to an embodiment m = 3, wherein the coordinates comprise the time-based coordinate and two-dimensional spatial coordinates. According to a further embodiment m = 4, wherein the coordinates comprise the time-based coordinate and three-dimensional spatial coordinates.

The artificial neural network can have an output layer with n x p coordinates, where p indicates the different classes used for segmentation. According to an embodiment, p = 3, and the respective classes comprise non-stationary objects, stationary objects and noise. According to further embodiments, different velocities may be grouped into different classes during segmentation.

The artificial neural network can be a deep neural network comprising several hidden layers between the input layer and the output layer. The hidden layers may comprise max-pooling-layers and/or multilayer perceptron, MLP, layers.

The driver assistance system 7 further comprises a controlling device 6 which may control at least one function of the vehicle based on the segmented radar data. For example, the controlling device 6 may accelerate or decelerate the vehicle, or may influence the moving direction of the vehicle.

Figure 2 shows a schematic illustration of radar reflections. There are radar reflections 21 and 22 corresponding to moving (non-stationary objects) and radar reflections 23 and 24 corresponding to stationary objects. Herein, the radar reflections 23 and 24 corresponding to stationary objects follow trajectories which are essentially parallel to the time coordinate t. The labels x and y denote spatial dimensions.

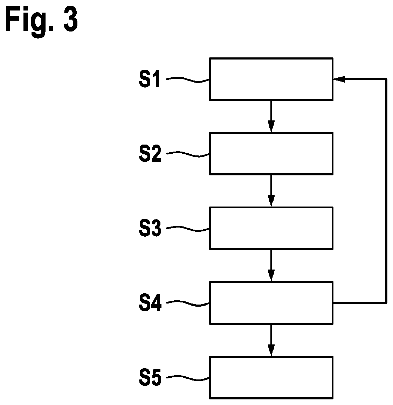

Figure 3 shows a flow chart of a method for segmenting radar data of a vehicle. The method can be carried out using the device 1 described above. Likewise, the device 1 can be configured to carry out any of the following method steps or aspects of the method.

In a step S1, FIFO memory storage is relocated. The size may be restricted to a fixed number of frames, e.g. 5 frames. The current pose of the vehicle may be extracted and stored as a global coordinate system. However, the invention is not restricted to the vehicle coordinate system as a global coordinate system. According to other embodiments, different common global coordinate systems can be used.

After a drift occurs in ego vehicle positioning, the global coordinate system changes. The current ego vehicle is then again extracted as a global coordinate system. All tracked coordinates can be transformed by transforming their spatial coordinates into the new global coordinate system. The new ego vehicle pose is stored as the global coordinate system.

Next, measurement initiates. The current ego vehicle speed is extracted. The at least one radar sensor 5 acquires radar data provided with a timestamp. A device 1 receives the radar data acquired at the present measurement cycle. The device 1 may be located in the vehicle. At least some functions of the device 1 can also be located outside of the vehicle, e.g., in a distant server.

In a second step S2, the device 1 identifies, for the present measurement cycle, radar reflections and determines coordinates of the radar reflections, based on the radar data acquired at the present measurement cycle. The coordinates of each radar reflection comprise a time-based coordinate and spatial coordinates, wherein the spatial coordinates are defined relative to the global coordinate system. The spatial coordinates may also first be defined in a non-global coordinate system and may then be transformed into the global coordinate system.

The time-based coordinates may be computed based on timestamps or measurement times. The time-based coordinate of the radar reflection may be obtained by multiplying a measurement time of the associated measurement cycle with a current velocity of the vehicle.

In a first iteration, the time-based coordinate may be set to zero. Otherwise the time-based coordinate may be defined as deltaT · v, where

$$deltaT = current\ timestamp - previous\ timestamp$$

and v denotes the current speed of the vehicle.

In step S3, the coordinates of the radar reflections of at least some of the measurement cycles are provided as input to a trained artificial neural network. The coordinates of the radar reflections may be stored in a FIFO memory 3. That is, if new coordinates are added, the oldest are deleted.

In step S4, a segmentation of the radar reflections is received as output of the trained artificial neural network.

The method can then repeat again from step S1.

The method further comprises a step S5 of controlling at least one function of the vehicle based on the segmented radar reflections.

**Claims**

1. A device (1) for segmenting radar data of a vehicle, comprising:

   an interface (2) configured to receive, from at least one radar sensor (5) of the vehicle, radar data acquired at a plurality of measurement cycles; and
   a computing device (4) configured to:

   identify, for each measurement cycle, radar reflections and to determine coordinates of the radar reflections, based on the radar data acquired at the measurement cycle, wherein the coordinates of each radar reflection comprise a time-based coordinate and spatial coordinates, wherein the spatial coordinates are defined relative to a global coordinate system;
   provide the coordinates of the radar reflections of at least some of the measurement cycles as input to a trained artificial neural network; and
   receive a segmentation of the radar reflections as output of the trained artificial neural network;
   **characterized in that**
   the time-based coordinate of each radar reflection has a unit of distance; and
   for each radar reflection associated with a certain measurement cycle, the time-based coordinate of the radar reflection is obtained by multiplying a measurement time of the associated measurement cycle with a current velocity of the vehicle.

2. The device (1) according to claim 1, wherein the computing device (4) is configured to perform the steps of providing the coordinates of the radar reflections of at least some of the measurement cycles as input to a trained artificial neural network, and of receiving a segmentation of the radar reflections as output of the trained artificial neural network after each new measurement cycle.

3. The device (1) according to claim 1 or 2, further comprising a first-in first-out memory (3) for storing the coordinates of the radar reflections.

4. The device (1) according to any of the preceding claims, wherein the segmentation comprises a class of non-stationary objects and a class of stationary objects.

5. The device (1) according to any of the preceding claims, wherein the segmentation comprises a class corresponding to noise.

6. The device (1) according to any of the preceding claims, wherein the computing device (4) is further configured to determine the global coordinate system as a current pose of the vehicle, based on a current velocity of the vehicle.

7. A driver assistance system (7) for a vehicle, comprising

   at least one radar sensor (5) of the vehicle, configured to acquire radar data;
   a device (1) for segmenting radar data according to any of the preceding claims; and
   a controlling device (6) configured to control at least one function of the vehicle based on the segmented radar data.

8. A method for segmenting radar data of a vehicle, comprising the steps:

   receiving (S1), from at least one radar sensor (5) of the vehicle, radar data acquired at a plurality of measurement cycles;
   identifying (S2), for each measurement cycle, radar reflections and determining coordinates of the radar reflections, based on the radar data acquired at the measurement cycle, wherein the coordinates of each radar reflection comprise a time-based coordinate and spatial coordinates, wherein the spatial coordinates are defined relative to a global coordinate system;
   providing (S3) the coordinates of the radar reflections of at least some of the measurement cycles as input to a trained artificial neural network; and
   receiving (S4) a segmentation of the radar reflections as output of the trained artificial neural network;
**characterized in that**
the time-based coordinate of each radar reflection has a unit of distance; and
for each radar reflection associated with a certain measurement cycle, the time-based coordinate of the radar reflection is obtained by multiplying a measurement time of the associated measurement cycle with a current velocity of the vehicle.

**Patentansprüche**

1. Vorrichtung (1) zum Segmentieren von Radardaten eines Fahrzeugs, umfassend:

   eine Schnittstelle (2), die dafür ausgelegt ist, von mindestens einem Radarsensor (5) des Fahrzeugs Radardaten zu empfangen, die in einer Mehrzahl von Messzyklen erfasst wurden; und
   eine Rechenvorrichtung (4), die zu Folgendem ausgelegt ist:

   Identifizieren, für jeden Messzyklus, von Radarreflexionen und Bestimmen von Koordinaten der Radarreflexionen basierend auf den in dem Messzyklus erfassten Radardaten, wobei die Koordinaten jeder Radarreflexion eine zeitbasierte Koordinate und räumliche Koordinaten umfassen, wobei die räumlichen Koordinaten bezüglich eines globalen Koordinatensystems definiert sind;
   Bereitstellen der Koordinaten der Radarreflexionen von mindestens einigen der Messzyklen als Eingabe in ein trainiertes künstliches neuronales Netz; und
   Empfangen einer Segmentierung der Radarreflexionen als Ausgabe des trainierten künstlichen neuronalen Netzes;
   **dadurch gekennzeichnet, dass**
   die zeitbasierte Koordinate jeder Radarreflexion eine Entfernungseinheit aufweist; und
   für jede Radarreflexion, die einem bestimmten Messzyklus zugeordnet ist, die zeitbasierte Koordinate der Radarreflexion erhalten wird, indem eine Messzeit des zugeordneten Messzyklus mit einer aktuellen Geschwindigkeit des Fahrzeugs multipliziert wird.

2. Vorrichtung (1) nach Anspruch 1, wobei die Rechenvorrichtung (4) dafür ausgelegt ist, die Schritte des Bereitstellens der Koordinaten der Radarreflexionen von mindestens einigen der Messzyklen als Eingabe in ein trainiertes künstliches neuronales Netz und des Empfangens einer Segmentierung der Radarreflexionen als Ausgabe des trainierten künstlichen neuronalen Netzes nach jedem neuen Messzyklus auszuführen.

3. Vorrichtung (1) nach Anspruch 1 oder 2, ferner umfassend einen FIFO-Speicher (3) zum Speichern der Koordinaten der Radarreflexionen.

4. Vorrichtung (1) nach einem der vorhergehenden Ansprüche, wobei die Segmentierung eine Klasse von nichtstationären Objekten und eine Klasse von stationären Objekten umfasst.

5. Vorrichtung (1) nach einem der vorhergehenden Ansprüche, wobei die Segmentierung eine Klasse umfasst, die einem Rauschen entspricht.

6. Vorrichtung (1) nach einem der vorhergehenden Ansprüche, wobei die Rechenvorrichtung (4) ferner dafür ausgelegt ist, das globale Kommunikationssystem als eine aktuelle Lage des Fahrzeugs zu bestimmen, basierend auf einer aktuellen Geschwindigkeit des Fahrzeugs.

7. Fahrerassistenzsystem (7) für ein Fahrzeug, umfassend:

mindestens einen Radarsensor (5) des Fahrzeugs, der dafür ausgelegt ist, Radardaten zu erfassen; und
eine Vorrichtung (1) zum Segmentieren von Radardaten nach einem der vorhergehenden Ansprüche und
eine Steuervorrichtung (6), die dafür ausgelegt ist, mindestens eine Funktion des Fahrzeugs basierend auf den segmentierten Radardaten zu steuern.

8. Verfahren zur Segmentierung von Radardaten eines Fahrzeugs, umfassend die folgenden Schritte:

Empfangen (S1), von mindestens einem Radarsensor (5) des Fahrzeugs, von Radardaten, die in einer Mehrzahl von Messzyklen erfasst wurden;
Identifizieren (S2), für jeden Messzyklus, von Radarreflexionen und Bestimmen von Koordinaten der Radarreflexionen basierend auf den in dem Messzyklus erfassten Radardaten, wobei die Koordinaten jeder Radarreflexion eine zeitbasierte Koordinate und räumliche Koordinaten umfassen, wobei die räumlichen Koordinaten bezüglich eines globalen Koordinatensystems definiert sind;
Bereitstellen (S3) der Koordinaten der Radarreflexionen von mindestens einigen der Messzyklen als Eingabe in ein trainiertes künstliches neuronales Netz; und
Empfangen (S4) einer Segmentierung der Radarreflexionen als Ausgabe des trainierten künstlichen neuronalen Netzes;
**dadurch gekennzeichnet, dass**
die zeitbasierte Koordinate jeder Radarreflexion eine Entfernungseinheit aufweist; und
für jede Radarreflexion, die einem bestimmten Messzyklus zugeordnet ist, die zeitbasierte Koordinate der Radarreflexion erhalten wird, indem eine Messzeit des zugeordneten Messzyklus mit einer aktuellen Geschwindigkeit des Fahrzeugs multipliziert wird.

## Revendications

1. Dispositif (1) de segmentation de données radar d'un véhicule, comprenant :

une interface (2) configurée pour recevoir, en provenance d'au moins un capteur radar (5) du véhicule, des données radar acquises lors d'une pluralité de cycles de mesure ; et
un dispositif (4) de calcul configuré pour :

identifier, pour chaque cycle de mesure, des réflexions radar et pour déterminer des coordonnées des réflexions radar, d'après les données radar acquises lors du cycle de mesure, les coordonnées de chaque réflexion radar comprenant une coordonnée temporelle et des coordonnées spatiales, les coordonnées spatiales étant définies par rapport à un système mondial de coordonnées ;
fournir les coordonnées des réflexions radar d'au moins certains des cycles de mesure en tant qu'entrée à un réseau neuronal artificiel entraîné ; et
recevoir une segmentation des réflexions radar en tant que sortie du réseau neuronal artificiel entraîné ;
**caractérisé en ce que**
la coordonnée temporelle de chaque réflexion radar a une unité de distance ; et
pour chaque réflexion radar associée à un certain cycle de mesure, la coordonnée temporelle de la réflexion radar est obtenue en multipliant un temps de mesure du cycle de mesure associé par une vitesse actuelle du véhicule,

2. Dispositif (1) selon la revendication 1, le dispositif (4) de calcul étant configuré pour exécuter les étapes consistant à fournir les coordonnées des réflexions radar d'au moins certains des cycles de mesure en tant qu'entrée à un réseau neuronal artificiel entraîné, et à recevoir une segmentation des réflexions radar en tant que sortie du réseau neuronal artificiel entraîné après chaque nouveau cycle de mesure.

3. Dispositif (1) selon la revendication 1 ou 2, comprenant en outre une mémoire première-entrée première-sortie (3) pour stocker les coordonnées des réflexions radar.

4. Dispositif (1) selon l'une quelconque des revendications précédentes, la segmentation comprenant une classe d'objets non stationnaires et une classe d'objets stationnaires.

5. Dispositif (1) selon l'une quelconque des revendications précédentes, la segmentation comprenant une classe correspondant à du bruit.

6. Dispositif (1) selon l'une quelconque des revendications précédentes, le dispositif (4) de calcul étant en outre configuré pour déterminer le système mondial de coordonnées en tant que pose actuelle du véhicule, sur la base d'une vitesse actuelle du véhicule.

7. Système (7) d'assistance au conducteur pour un véhicule, comprenant au moins un capteur radar (5) du véhicule, configuré pour acquérir des données radar ;

   un dispositif (1) de segmentation de données radar selon l'une quelconque des revendications précédentes ; et
   un dispositif (6) de commande configuré pour commander au moins une fonction du véhicule d'après les données radar segmentées.

8. Procédé de segmentation de données radar d'un véhicule, comprenant les étapes de :

   réception (S1), en provenance d'au moins un capteur radar (5) du véhicule, de données radar acquises lors d'une pluralité de cycles de mesure ;
   identification (S2), pour chaque cycle de mesure, de réflexions radar et détermination de coordonnées des réflexions radar, d'après les données radar acquises lors du cycle de mesure, les coordonnées de chaque réflexion radar comprenant une coordonnée temporelle et des coordonnées spatiales, les coordonnées spatiales étant définies par rapport à un système mondial de coordonnées ;
   fourniture (S3) des coordonnées des réflexions radar d'au moins certains des cycles de mesure en tant qu'entrée à un réseau neuronal artificiel entraîné ; et
   réception (S4) d'une segmentation des réflexions radar en tant que sortie du réseau neuronal artificiel entraîné, comprenant :

   **caractérisé en ce que**
   la coordonnée temporelle de chaque réflexion radar a une unité de distance ; et
   pour chaque réflexion radar associée à un certain cycle de mesure, la coordonnée temporelle de la réflexion radar est obtenue en multipliant un temps de mesure du cycle de mesure associé par une vitesse actuelle du véhicule,

**Fig. 1**

**Fig. 2**

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018002521 A1

- DE 102019220615 A1

**Non-patent literature cited in the description**

- **SCHUMANN et al.** Scene Understanding with Automotive Radar. *IEEE Transactions on intelligent Vehicles*, 2019, vol. 5 (2), 188-203
- **GIESE et al.** Road course estimation using deep learning on radar data. *2017 18th International Radar Symposium (IRS)*, 2017, 1-7

- **QI et al.** *PointNet: Deep Learning on Point Sets for 3D Classification and Segmentation*, https://arxiv.org/abs/1612.00593